# EUROPEAN PATENT SPECIFICATION

(11) **EP 2 754 881 B1**
(45) Date of publication and mention of the grant of the patent: **24.05.2017**
(21) Application number: 12830796.4
(22) Date of filing: 30.08.2012
(51) Int. Cl.: B32B 29/02, B32B 5/02, B32B 29/08, F02M 35/10, F02M 35/12

(54) **ASPIRATION DUCT**
ASPIRATIONSKANAL
CONDUIT D'ASPIRATION

(30) Priority: 05.09.2011 JP 2011192723
(43) Date of publication of application: 16.07.2014
(73) Proprietor: Roki Co., Ltd., Hamamatsu-shi, Shizuoka 431-3314 (JP)
(72) Inventor: MATSUMOTO Taketoshi, Hamamatsu-shi Shizuoka 431-3314 (JP); UCHIYAMA Akira, Hamamatsu-shi Shizuoka 431-3314 (JP); ONODA Tadayuki, Hamamatsu-shi Shizuoka 431-3314 (JP)
(74) Representative: Viering, Jentschura & Partner mbB Patent- und Rechtsanwälte
(86) International application number: PCT/JP2012/071959
(87) International publication number: WO 2013/035614

(56) References cited:
- EP-A1- 2 333 766
- DE-A1-102009 033 897
- GB-A- 957 709
- JP-A- H04 223 148
- JP-A- 2002 004 834
- JP-A- 2004 332 673
- JP-A- 2007 085 315
- JP-A- 2008 128 168
- JP-A- 2008 297 936
- JP-A- 2009 270 531
- JP-A- 2009 293 442
- US-A1- 2003 062 013
- US-A1- 2004 187 826
- US-A1- 2009 293 832

## Description

### Technical Field

The present invention relates to an intake duct, and more specifically, an air intake duct capable of reducing intake noise generated at a time of introducing outside air into an internal combustion engine or alternative power system or engine.

### Background Technology

Conventionally, there are known a technology of adoption of various types of air intake ducts for reducing intake noise in addition to reduction of noise of specific frequency calculated based on resonance theory by Helmholtz by locating a resonator in an intake passage for reducing intake noise generated in an intake system at a time of introduction of external air into an internal combustion engine such as gasoline engine or alternative power mechanism such as fuel cell or battery.

An intake duct disclosed in Patent Document 1 is formed with a duct wall formed of resin into tubular shape, and in the intake duct for introducing external air into an internal combustion engine, the duct wall is provided with a waterproof/moisture-permeable (merely permeable) member formed by laminating a water repellent layer having high density fiber and a waterproof/permeable layer formed of microporous membrane.

The thus formed intake duct disclosed in the Patent Document 1 is provided with the waterproof/permeable layer for the duct wall of the tubular intake duct, so that moisture invading into the engine room can be prevented from entering the intake duct. In addition, intake noise can be reduced by noise absorption function of the microporous membrane.

Further, Patent Document 2 discloses that an opening long in the longitudinal direction of a duct wall is formed. The whole of the opening is covered with non-woven fabric, and the lateral width of the opening is set to be not shorter than 1/20 of the circumferential length of the duct wall. Alternatively, a porous member is thermally welded with the head of an opening of a small cylindrical portion projecting from the duct wall of a duct body, while the duct body is prevented from deformation. In a method for manufacturing the air take duct according to Patent Document 2, a high-melting molded piece is brought into contact with a hot plate so as to be heated. A low-melting molded piece is disposed at a distance from the hot plate so as to be heated by radiation heat from the hot plate.

Further, Patent Document 3 describes improvements in or relating to tubes and a method of production thereof and Patent Document 4 describes sound absorbing material.

### Prior Art Document

### Patent Document

Patent Document 1: Japanese Patent Laid-open Publication No. 2009-293442
Patent Document 2: US 2003/062013A1
Patent Document 3: GB 957709A
Patent Document 4: EP 2333766A1

### Disclosure of The Invention

### Problem to be solved by The Invention

However, the structure of the conventional intake duct described above is effected with waterproof treatment, intake noise reduction effect cannot be sufficiently achieved, and hence, originally required silencing function for a silencing duct cannot be also sufficiently achieved, being inconvenient.

### Means for solving The Problem

The invention provides an air intake duct according to claim 1. Further embodiments are described in the dependent claims. The air intake duct according to the present invention has a duct wall section formed of resin in form of tube and configured to introduce external air into an internal combustion engine or alternate power supply system, wherein the duct wall section is provided with a silencing member formed of a lamination of a surface layer formed of a non-woven fabric to which thermosetting resin is impregnated and a ventilation adjusting layer formed of an extendable paper material having a surface in which a plurality of concave and convex portions are formed, the silencing member comprises at least one pair of the surface layers on front and back surfaces of at least one pair of the ventilation adjusting layers, and an intermediate layer is formed between the paired ventilation adjusting layers, the intermediate layer being formed of a same material as that of the surface layer, and the duct wall section is mutually jointed by an anchor effect of the surface of the silencing member.

It may be preferred that, in the air intake duct of the present invention, the intermediate layer is bonded to the ventilation adjusting layers by means of bonding agent.

It may be preferred that, in the air intake duct of the present invention, the silencing member has a thickness of 1.0 to 3.0 mm and the silencing member has ventilation resistance of 1.0 to 4.0kPa· s/m.

It may be preferred that, in the air intake duct of the present invention, the silencing member is formed by means of insert-molding to the duct wall section.

Further, it is to be noted that the above embodiment and preferred modes thereof do not provide all the essential features of the present
invention, and for example, sub-combination of these modes may also constitute the invention.

### Effects of The Invention

According to the air intake duct of the present invention, the duct wall section formed to the tubular air intake duct is provided with a surface layer formed by impregnating thermosetting resin into a porous non-woven fabric, so that the air intake duct can provide sufficient heat resisting property and water-proof property, as well as more effective sound reduction function. Further, in a case of only porous non-woven fabric, good ventilation performance can be achieved with large radiation noise, and hence, by laminating the ventilation adjusting layer, the ventilation performance can be properly adjusted with reduced radiation noise.

Furthermore, in the air intake duct according to the present invention, since the silencing member is formed to the duct wall section through the insert molding process, it is possible to provide an air intake duct having improved intake-air noise attenuation effect without increasing the number of members or parts. Moreover, it is not necessary to additionally provide a cover around the outer periphery of the air intake duct, so that the outer diameter of the air intake duct can be reduced, resulting in downsizing of the entire structure of the air intake duct.

### Brief Description of The Drawings

[Fig. 1] is a schematic view illustrating an air intake passage of an internal combustion engine.
[Fig. 2] is a perspective view showing the air intake duct according to an embodiment of the present invention.
[Fig. 3] is a perspective view of a halved duct constituting the air intake duct according to the present embodiment.
[Fig. 4] is a sectional view showing a structure of a silencing member.
[Fig. 5] is a graph representing comparison between an Example 1 of an embodiment of the present invention and a Comparative Example 1.
[Fig. 6] is a graph showing comparison between an Example 2 of the embodiment of the present invention and Comparative Examples 1 and 2.
[Fig. 7] is a graph showing comparison between an Example 3 of the embodiment of the present invention and the Comparative Examples 1 and 2.
[Fig. 8] is a graph showing comparison between an Example 4 of the embodiment of the present invention and the Comparative Examples 1 and 2.
[Fig. 9] is a graph showing measurement of a silenced amount in a wide frequency band area.

### Means for embodying The Invention

Hereunder, a preferred embodiment for carrying out the present invention will be explained with reference to the accompanying drawings. Further, it is to be noted that the following embodiment does not limit the invention defined by appended claims, and all the combination of the subject features of the present embodiment described herein is not essential for the solution of the present invention.

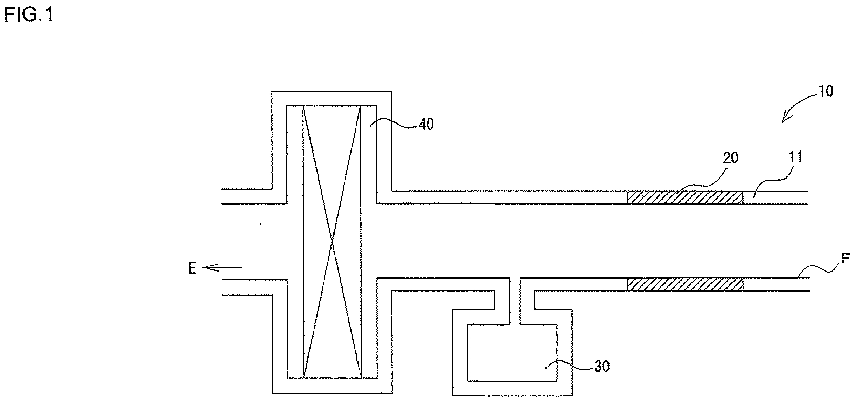

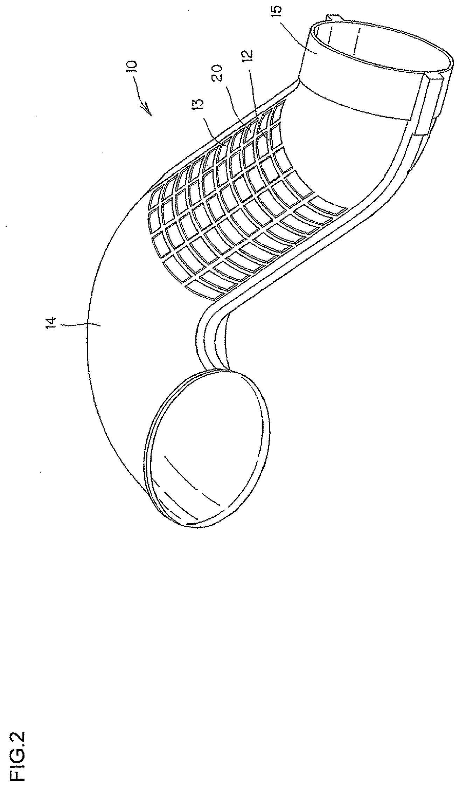

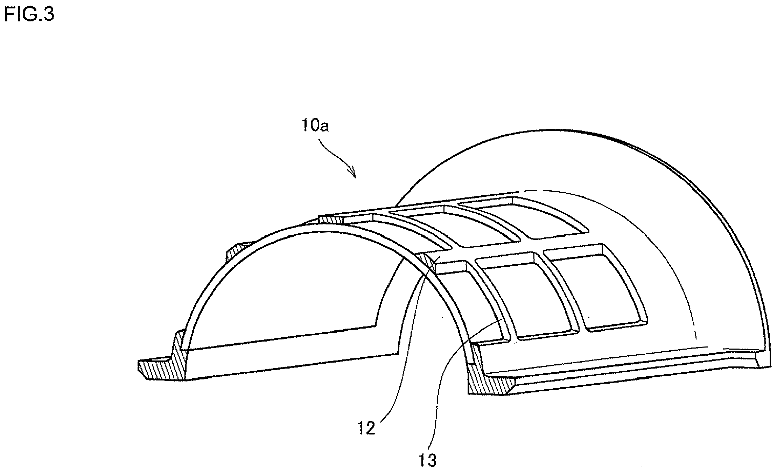

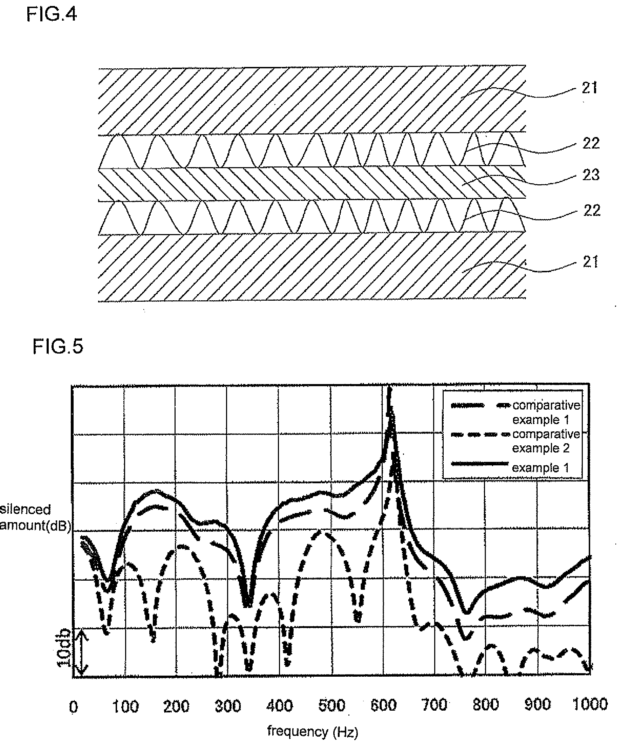

Fig. 1 is a schematic view illustrating an air intake passage of an internal combustion engine, Fig. 2 is a perspective view showing the air intake duct according to an embodiment of the present invention, Fig. 3 is a perspective view of a halved duct constituting the air intake duct according to the present embodiment, and Fig. 4 is a sectional view showing a structure of a silencing member.

As shown in Fig. 1, in an air intake passage of an internal combustion engine, a resonator 30 is connected to an air intake duct 10 formed from a duct wall section 11 between an air intake port F and an air cleaner 40. The resonator 30 is constructed so as to have a volume calculated based on the resonance theory by Helmholtz for reducing noise having specific frequency, and a desired intake noise generated in the air intake passage can be reduced by setting a value of such volume to an appropriate value. In addition, for the air intake duct 10 according to the present embodiment is provided with the duct wall section 11 formed with a silencing member 20 on the air intake port side F than the location of the resonator 30. According to such construction in which the duct wall section 11 is formed with the silencing member 20 on the air intake port side F than the location of the resonator 30, the intake noise can be further effectively reduced. It is to be noted that if the intake noise can be sufficiently reduced only by the location of the silencing member 20, it is not absolutely necessary to locate the resonator 30.

Next, the air intake duct 10 according to the present embodiment will be described with reference to Figs. 2 and 3.

As shown in Fig. 2, the air intake duct 10 of the present embodiment is provided with the duct wall section 11 formed with a resin material in form of tube. Further, since a part of the duct wall section 11 is formed from a grid-shaped frame 12 so as to provide a number of holes 13 to the duct wall section 11, and the holes 13 are closed by locating the silencing member 30 so as to cover such holes 13.

In the air intake duct 10 of the present embodiment, the silencing member 20 is formed by an insert-molding process, the silencing member 20, and the duct wall section 11 and the grid-shaped frame 12 are not bonded together by immersing a synthetic resin material between fibers of the silencing member 20 and then solidifying them. The synthetic resin material is not invaded between the fibers of the silencing member 20, and the silencing member 20. The duct wall section 11 and the grid-shaped frame 12 are mutually joined by an anchor effect of the surface of the silencing member 20. It is further to be noted that, in the present embodiment, although an example in which the silencing member 20 is insert-molded to the duct wall section 11, the silencing member 20 may be wound up around an outer periphery of the air intake duct 10 so as to cover the holes 13 of the duct wall section 11.

As shown in Fig. 3, the duct wall section 11 to which the silencing member 20 is formed by the insert-molding process forms the intake duct 10 by halved duct parts 10a, 10a by means of butt-joining process. As described above, by forming the duct wall section 11 with the halved duct parts 10a, the silencing member 20 can be easily insert-molded to the duct wall section 11. In addition, as shown in Fig. 2, end portions of the halved duct parts 10a in an air flow direction are joined to an engine side duct 14 and an intake side duct 15, respectively, to thereby form one tubular air intake duct 10.

As such joining method, there may be provided general methods utilized for resin molding such as vibration welding method, heat plate welding method, ultrasonic welding method and the like, and other than the above methods, a bonding method by means of bonding agent, a fastening method by means of bolt, a fitting method of the respective halved duct parts, and a die slide injection (DSI) method may be also utilized.

Moreover, the number of the holes 13 and area of the holes 13 may be changed appropriately in consideration of intake noise reducing or attenuating ability of the silencing member 20 to be used. Furthermore, as shown in Fig. 3, since the silencing member 20 is formed through the insert-molding process so as to be flush in its surface with the inner peripheral surface of the duct wall section 11, the inner peripheral surface of the duct wall section 11 can be formed to be flat, and hence, fluid passing inside the air intake duct 10 can pass smoothly.

A structure of the silencing member 20 will be described hereunder with reference to Fig. 4.

The silencing member 20 is provided with a surface layer 21 which is formed by impregnating a thermosetting resin to a non-woven fabric and a ventilation adjusting layer 22 which is formed of an extendable paper material having a rough surface formed in concave/convex shape. The surface layer 21 is located to both the outsides of front and back (inner and outer) surfaces of the silencing member 20 so as to interpose the ventilation adjusting layer 22 and an intermediate layer 23 therebetween.

The non-woven fabric used for the surface layer 21 has a base material formed of various fabrics such as aramid fiber, imide fiber, polyvinylchloride fiber, phenol fiber, rayon fiber, polyester fiber, polypropylene fiber, polyamide series fiber, acrylic acid fiber, carbon fiber, glass fiber, alumina fiber (ceramic fiber), boron fiber, novoride fiber, fluorine fiber, metallic fiber or like.

Further, as the thermosetting resin impregnated to the non-woven fabric, there may be used, for example, urethane resin, melamine resin, thermosetting-type acryl resin, thermosetting-type acryl resin particularly cured by forming ester-link through heating process, urethane resin, epoxy resin, thermosetting-type polyester and the like.

Hereunder, the ventilation adjusting layer 22 will be explained.

The ventilation adjusting layer 22 is formed of an extendable paper material as described above.

The extendable paper material may be formed from: a crape-treated paper having wrinkled surface shape (wrinkled convex/concave shape); an embossed paper having a surface on which a number of projections are formed, and an embossed-crape-treated paper having a surface on which wrinkles and a number of projections are formed. On the other hand, as a pulp used for the extendable paper material, there may be provided, for example, hardwood pulp, softwood pulp, hemp pulp, kenaf pulp, bamboo pulp, esparto pulp, bagusse pulp, and reedy pulp. Other than natural pulps such as these wood pulps or non-wood pulps, synthetic resin may be mixed by about 1 to 50% in amount.

The intermediate layer 23 is interposed for adjusting the ventilation resistance of the silencing member 20 in a manner of being sandwiched between a pair of ventilation adjusting layers 22. The intermediate layer 23 is a laminated layer formed of the same substance as that of the surface layer 21.

Hereunder, the structure of the silencing member 20 according to the present embodiment will be explained.

The silencing member 20 is composed of, as shown in Fig. 4, the intermediate layer 23, a pair of ventilation layers 22 between which the intermediate layer 23 is interposed, and the surface layers 21 which are further disposed on the outer surfaces of the ventilation layers 22. Such laminated structure is thereafter subjected to heat-plate fusing by means of hot pressing process to thereby provide an integral layer structure. It is further to be noted that a bonding agent may be interposed, as occasion demands, between the surface layer 21 and the ventilation adjusting layer 22 and between the ventilation adjusting layer 22 and the intermediate layer 23. As such bonding agent, acrylic resin series bonding agent, urethane resin series bonding agent, epoxy resin series bonding agent, vinyl chloride resin solvent series bonding agent, chloroprene rubber series bonding agent, cyanoacrylate series bonding agent, silicone series bonding agent, modified silicone series bonding agent, resorcinol series bonding agent and the like may be used.

Further, the silencing member 20 according to the present embodiment is adjusted so as to have a thickness of 1-3 mm after the hot-pressing process and ventilation resistance of 1-4 kPa· s/m.

As described above, since the silencing member 20 of the present embodiment is provided with the intermediate layer 23 formed of the same substance as that of the surface layer 21 for adjusting the ventilation resistance, it is possible to prevent manufacturing cost from increasing and to achieve high intake noise attenuation effect.

### EXAMPLE

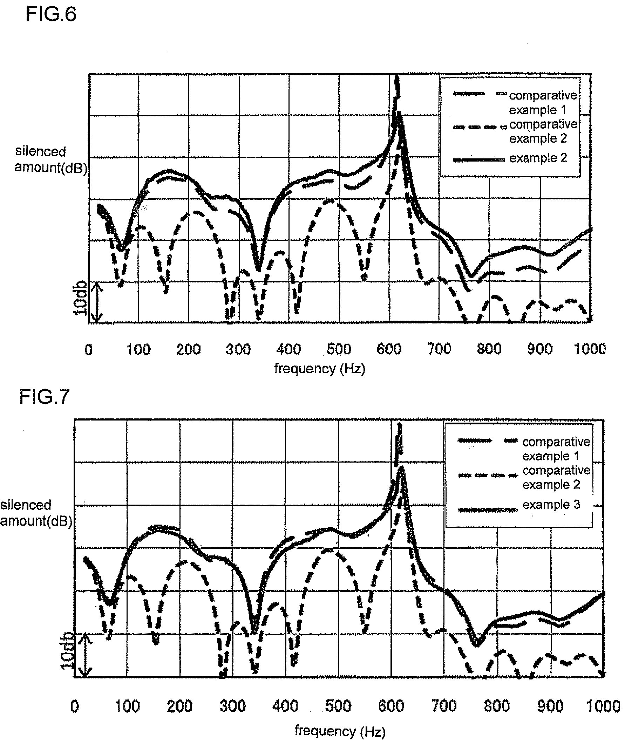

Figs. 5 to 8 represent results of analyzing the frequencies and the silenced amounts by the air intake ducts according to the present embodiment, a conventional air intake duct having silencing function formed by two tubular pipes are bonded by means of belt-shaped felt having silencing function (Comparative Example 1) and an air intake duct having no silencing function (Comparative Example 2), and the Examples shown in Figs. 5 to 8 are adjusted in their ventilation resistances to 1.11 kPa · s/m, 1.51 kPa · s/m, 1.63 kPa · s/m, and 1.98 kPa · s/m, respectively.

As represented in Figs. 5 to 8, in the Examples 1-4, silenced amount equal to or more than that in the Comparative Example 1 in comparison with the Comparative Example 2 could be achieved in all the frequency bands (or frequency band ranges). Particularly, as shown in Fig. 5, in the Example 1, in which the ventilation resistance is adjusted to 1.11kPa · s/m, it is found that particularly large silenced amount was obtained in comparison with the Comparative Example 1. However, since it is also known that as the silenced amount increases, radiation sound from the air intake duct also increases, it may be preferred that the ventilation resistance is set to be not less than 1kPa· s/m.

Furthermore, as shown in Figs. 5 to 8, it is also found that as the ventilation resistance value increases, the value approaches a value of the graph of the Comparative Example 1. On the other hand, in a case when the ventilation resistance excessively increases, since balance between the silenced amount and the radiation sound becomes worse, it may be preferred that the upper limit of the ventilation resistance is set to about 4kPa· s/m, more preferably, to about 2kPa· s/m.

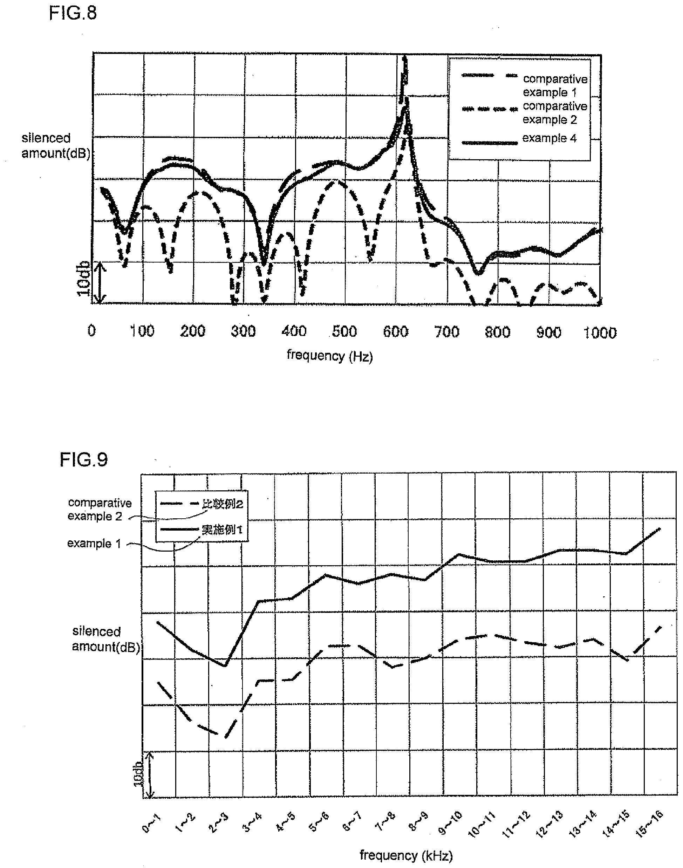

Fig. 9 represents analysis result according to measurement of silenced amount in a wider frequency band range with respect to a conventional air intake duct (Comparative Example 2) having no silencing function. In view of the graph of Fig. 9, it is found that the air intake duct according to the present embodiment achieves an increased silenced amount in a high frequency band range (4 to 16kHz). As described above, the air intake duct according to the present invention can also achieve higher silencing function to noise or sound in the high frequency band range.

Further, with the air intake duct 10 according to the present invention, although it was explained in the above that the duct wall section 11 is formed from the frame 12 in form of grid to thereby form hole portions 13, the duct wall section 11 may be formed from a punched metal plate having a plurality holes or formed from net-shaped material.

Furthermore, in the forgoing, although it was described that the air intake duct 10 according to the present embodiment is applicable to an intake duct for introducing external air into an internal combustion engine, the air intake duct 10 of the present embodiment is not limited to such an air intake duct and it may be applied to an air intake duct for introducing external air for cooling an alternate power supply such as fuel cell or battery mounted to a vehicle body. In such case, noise to be absorbed or silenced is a rotating noise or wind noise of a fan for introducing external air, which is a noise having frequency higher than that of an intake air noise generated from an internal combustion engine.

Furthermore, in the air intake duct 10 of the present embodiment described above, although the silencing member 20 is applied only to the linear (straight) portion of the duct wall section 11, the silencing member 20 may be applied to the curved portion of the air intake duct 10. It is thus apparent that such alternation and improved modification may be included in the technical scope of the present invention as is apparent from the scope of the appended claims.

### Reference Numeral

10 --- air intake duct, 10a --- halved duct parts, 11 --- duct wall section, 12 --- frame, 13 --- hole portion, 14 --- engine side duct, 15 --- air intake side duct, 20 --- silencing member, 21 --- surface layer, 22 --- ventilation adjusting layer, 23 --- intermediate layer, 30resonator, 40 --- air cleaner, E --- internal combustion engine, F --- air intake port.

## Claims

1. An air intake duct (10) having a duct wall section (11) formed of resin in form of tube and configured to introduce external air into an internal combustion engine (E) or alternate power supply system, wherein
- the duct wall section (11) is provided with a silencing member (20) formed of a lamination of a surface layer (21) formed of a non-woven fabric to which thermosetting resin is impregnated and a ventilation adjusting layer (22) formed of an extendable paper material having a surface in which a plurality of concave and convex portions are formed,
- the silencing member (20) comprises at least one pair of the surface layers (21) on front and back surfaces of at least one pair of the ventilation adjusting layers (22), and an intermediate layer (23) is formed between the paired ventilation adjusting layers (22), the intermediate layer (23) being formed of a same material as that of the surface layer (21),
- the duct wall section (11) is mutually jointed by an anchor effect of the surface of the silencing member (20),
- the silencing member (20) is formed through the inster-molding process so as to be flush in its surface with the inner peripheral surface of the duct wall section (11),
- a part of the duct wall section (11) is formed from a grid-shaped frame (12) so as to provide a number of holes (13) to the duct wall section (11) and the holes (13) are closed by locating the silencing member (20) so as to cover the holes (13), and
- the grid-shaped frame (12) is located only in the outer peripheral surface of the silencing member (20).

2. The air intake duct (10) according to claim 1, wherein the intermediate layer (23) is bonded to the ventilation adjusting layers (22) by means of bonding agent.

3. The air intake duct (10) according to claim 1 or 2, wherein the silencing member (20) has a thickness of 1 .0 to 3.0 mm and wherein the silencing member (20) has ventilation resistance of 1.0 to 4.0 kPa · s/m.

4. The air intake duct (10) according to any one of claims 1 to 3, wherein the silencing member (20) is located so as to close the holes (13) formed to the duct wall section (11).

5. The air intake duct (10) according to any one of the claims 1 to 4, wherein the silencing member (20) is formed by means of insert-molding to the duct wall section (11).

## Patentansprüche

1. Luftansaugkanal (10), aufweisend einen Kanalwandabschnitt (11), welcher aus Harz in Form eines Rohrs gebildet und dazu eingerichtet ist, Außenluft in einen Verbrennungsmotor (E) oder in ein alternatives Leistungszufuhrsystem einzuführen, wobei
- der Kanalwandabschnitt (11) mit einem Schalldämpfungselement (20) bereitgestellt ist, welches durch Laminieren einer Oberflächenschicht (21), welche aus einem Vliesstoff, der mit wärmehärtbarem Harz imprägniert ist, gebildet ist, und einer Ventilationseinstellungsschicht (22), welche aus einem ausdehnbaren Papiermaterial gebildet ist, das eine Oberfläche aufweist, in welcher eine Mehrzahl von konkaven und konvexen Abschnitten gebildet ist, gebildet ist,
- das Schalldämpfungselement (20) wenigstens ein Paar der Oberflächenschichten (21) auf einer vorderen und einer hinteren Fläche wenigstens eines Paares der Ventilationseinstellungsschichten (22) aufweist, und wobei eine Zwischenschicht (23) zwischen dem Paar von Ventilationseinstellungsschichten (22) gebildet ist, wobei die Zwischenschicht (23) aus einem gleichen Material wie dasjenige der Oberflächenschicht (21) gebildet ist,
- der Kanalwandabschnitt (11) durch eine Verankerungswirkung der Oberfläche des Schalldämpfungselements (20) verbunden ist,
- das Schalldämpfungselement (20) durch das Insert-Molding-Verfahren derart gebildet ist, dass seine Oberfläche bündig mit der Innenumfangsfläche des Kanalwandabschnitts (11) ist,
- ein Teil des Kanalwandabschnitts (11) aus einem gitterförmigen Rahmen (12) gebildet ist, um eine Anzahl von Löchern (13) in dem Kanalwandabschnitt (11) bereitzustellen, wobei die Löcher (13) verschlossen sind, indem das Schalldämpfungselement (20) derart angeordnet ist, dass es die Löcher (13) abdeckt, und
- der gitterförmige Rahmen (12) lediglich in der Außenumfangsfläche des Schalldämpfungselements (20) angeordnet ist.

2. Luftansaugkanal (10) nach Anspruch 1,
wobei die Zwischenschicht (23) mit den Ventilationseinstellungsschichten (22) mittels eines Haftmittels verbunden ist.

3. Luftansaugkanal (10) nach Anspruch 1 oder 2,
wobei das Schalldämpfungselement (20) eine Dicke von 1,0 bis 3,0 mm aufweist und wobei das Schalldämpfungselement (20) einen Ventilationswiderstand von 1,0 bis 4,0 kPa·s/m aufweist.

4. Luftansaugkanal (10) nach einem der Ansprüche 1 bis 3,
wobei das Schalldämpfungselement (20) derart angeordnet ist, dass es die in dem Kanalwandabschnitt (11) gebildeten Löcher (13) verschließt.

5. Luftansaugkanal (10) nach einem der Ansprüche 1 bis 4,
wobei das Schalldämpfungselement (20) durch Insert-Molding an dem Kanalwandabschnitt (11) gebildet ist.

## Revendications

1. Conduit d'admission d'air (10) présentant une section paroi de conduit (11) réalisée dans une résine en forme de tube, et étant configuré de façon à introduire l'air extérieur dans un moteur à combustion interne (E) ou dans un système d'alimentation alternatif, dans lequel :
- la section paroi de conduit (11) est dotée d'un élément silencieux (20) formé d'une stratification d'une couche de surface (21) formée d'un tissu non tissé imbibé de résine thermodurcissable, et d'une couche de réglage de ventilation (22) formée d'un matériau de papier extensible présentant une surface où sont formées une pluralité de parties concaves et convexes ;
- l'élément silencieux (20) comprend au moins une paire de couches de surface (21) sur les surfaces avant et arrière d'une paire au moins des couches de réglage de ventilation (22), et une couche intermédiaire (23) est formée entre les couches de réglage de ventilation appariées (22), la couche intermédiaire (23) étant formée dans le même matériau que celui de la couche de surface (21) ;
- la section paroi de conduit (11) est jointe de manière mutuelle par un effet d'ancrage de la surface de l'élément silencieux (20) ;
- l'élément silencieux (20) est formé en faisant appel à un procédé de moulage par insertion de façon à ce que sa surface affleure la surface périphérique intérieure de la section paroi de conduit (11) ;
- une partie de la section paroi de conduit (11) est formée à partir d'un bâti en forme de grille (12) de façon à fournir un certain nombre de trous (13) dans la section paroi de conduit (11), et les trous (13) sont fermés en plaçant l'élément silencieux (20) de manière à couvrir les trous (13) ; et
- le bâti en forme de grille (12) se situe seulement à la surface périphérique extérieure de l'élément silencieux (20).

2. Conduit d'admission d'air (10) selon la revendication 1, dans lequel la couche intermédiaire (23) est liée sur les couches de réglage de ventilation (22) au moyen d'un agent de liaison.

3. Conduit d'admission d'air (10) selon la revendication 1 ou la revendication 2, dans lequel l'élément silencieux (20) présente une épaisseur comprise entre 1,0 mm et 3,0 mm, et dans lequel l'élément silencieux (20) présente une résistance de ventilation comprise entre 1,0 kPa • s / m et 4,0 kPa • s / m.

4. Conduit d'admission d'air (10) selon l'une quelconque des revendications 1 à 3, dans lequel l'élément silencieux (20) est situé de façon à fermer les trous (13) formés dans la section paroi de conduit (11).

5. Conduit d'admission d'air (10) selon l'une quelconque des revendications 1 à 4, dans lequel l'élément silencieux (20) est formé en faisant appel à un procédé de moulage par insertion, sur la section paroi de conduit (11).
